# FASCICULE DE BREVET EUROPEEN

(11) **EP 0 589 793 B1**
(45) Date de publication et mention de la délivrance du brevet: **08.01.1997**
(21) Numéro de dépôt: 93402327.6
(22) Date de dépôt: 23.09.1993
(51) Int. Cl.: H02G 3/06

(54) **Système de fixation pour élément tubulaire souple**
Befestigungssystem für rohrförmiges biegsames Element
Fixing device for flexible tubular element

(30) Priorité: 25.09.1992 FR 9211469
(43) Date de publication de la demande: 30.03.1994
(73) Titulaire: ALCATEL BUSINESS SYSTEMS, F-75008 Paris (FR)
(72) Inventeur: Bey, Pescal, F-67400 Illkirch Graffenstaden (FR); Spinner, Roland, F-67105 Erstein (FR)
(74) Mandataire: Schaub, Bernard

(56) Documents cités:
- DE-A- 2 245 500
- FR-A- 2 558 016

## Description

L'invention concerne un système destiné à assurer la fixation d'un élément tubulaire souple sur une paroi et en particulier d'un élément de type câble ou tube sur une paroi du boîtier d'un appareil auquel l'élément est raccordé. Selon une solution connue, que l'on trouve en particulier dans le domaine des appareils électriques transportables destinés à être positionnés sur table, il est prévu de ménager des moyens de maintien et notamment une ou des rainures de maintien pour le câble de raccordement d'un appareil sur une paroi du boîtier de cet appareil. De tels moyens sont par exemple prévus dans le document FR-A-2558016. Comme il est connu les rainures de maintien permettent d'orienter convenablement un câble par rapport à un appareil, notamment lorsque ce câble vient se raccorder à l'appareil au travers d'une ouverture du boîtier où souvent se trouve un connecteur de raccordement du câble à l'appareil.

Selon un perfectionnement usuel, figurant notamment dans le document DE-A-2245500, il est prévu de ménager des coudes ou des angles de coincement de câble afin de faire encaisser les éventuels efforts de traction axiaux, subis par le câble en cours d'exploitation de l'appareil, par la paroi du boîtier via les coudes prévus à cette effet, plutôt que par le connecteur de raccordement souvent fragile.

Le câble est transversalement introduit par pression, dans la rainure destinée à le contenir, celle-ci comporte souvent des moyens de rétention de câble, par exemple constitués par des protubérances disposées sur au moins une des bordures longitudinales de la rainure. Dans une forme de réalisation connue, la mollesse relative de la gaine externe du câble est exploitée pour permettre un écrasement élastique temporaire du câble, au niveau des protubérances, lors de l'insertion de ce câble transversalement dans la rainure. Une rainure est habituellement dimensionnée pour un câble déterminé ce qui peut être gênant pour l'utilisateur, en cas de nécessaire remplacement d'un câble, si un câble pratiquement identique ne peut être trouvé. Ceci est également une contrainte pour le fabricant d'appareil qui ne dispose que de peu de marge dans le choix de ces câbles et qui peut être amené à exploiter différentes variantes d'un même appareil avec des câbles légèrement différents.

L'invention propose donc un système destiné à assurer la fixation d'un élément tubulaire souple sur une paroi dotée à cet effet d'une rainure de maintien dimensionnée pour loger un tronçon de cet élément tubulaire.

Selon une caractéristique de l'invention, la rainure de maintien est munie d'au moins un dispositif, de type quart de tour, composé d'au moins une languette transversale de rétention d'élément tubulaire venant surplomber la rainure sur la plus grande partie de la largeur de cette rainure en vue d'assurer la rétention et d'au moins un évidemment d'insertion d'élément tubulaire qui, entourant la languette , est latéralement ménagé en bordure de la rainure de l'autre côté de celle-ci par rapport à ladite languette, pour permettre l'insertion transversale, jusque dans la rainure, d'une portion d'élément tubulaire temporairement recourbée pour passer par l'évidement d'insertion au ras de la languette.

L'invention et ses avantages sont précisés dans la description qui suit en liaison avec les figures évoquées ci-dessous.

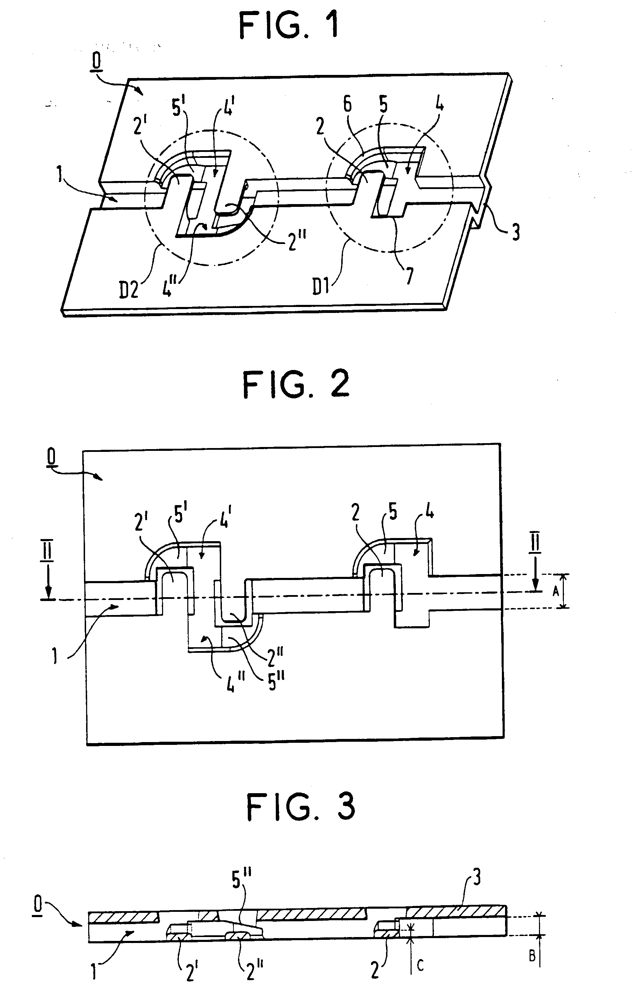

La figure 1 présente une vue en perspective d'une paroi équipée de deux systèmes de fixation selon l'invention. Les figures 2 et 3 présentent respectivement une vue de dessus et une coupe latérale selon II-II de l'ensemble présenté en figure 1.

Comme indiqué ci-dessus, la figure 1 présente une portion d'une paroi 0, supposée par exemple appartenir à un boîtier en matériau moulé d'un appareil, non représenté, destiné à recevoir un élément tubulaire souple, tel un câble ou un tube.

Cet appareil peut par exemple être un terminal de télécommunication raccordé par câble à une installation, le câble aboutissant à un connecteur placé dans une ouverture , non représentée, du boîtier enfermant l'appareil.

La paroi 0 comporte une rainure 1 de maintien d'élément tubulaire qui est ici montrée traversant la paroi 0 de part en part, les dimensions transversales de cette rainure, telles sa largeur A et sa profondeur B, sont choisies en fonction de la ou des dimensions transversales de l'élément tubulaire dont un tronçon est destiné à être reçu, étant entendu que l'on s'efforcera le plus souvent de prévoir une rainure et les systèmes de fixation qu'elle comporte pour plusieurs éléments tubulaires dimensionnellement compatibles et mutuellement exclusifs.

Selon une première forme de réalisation de l'invention, la rainure 1 est munie d'au moins un dispositif D1, dit de type quart de tour, composé d'une languette transversale 2 de rétention d'élément tubulaire qui, par exemple moulée avec la paroi 0, vient surplomber la rainure 1, en bordure de laquelle elle est ménagée et ici sur la plus grande partie de la largeur de cette rainure, la distance entre la languette 2 et le fond 3 de la rainure étant choisie en fonction de la dimension maximale correspondante d'élément tubulaire à recevoir.

Selon l'invention, un évidement 4 d'insertion d'élément tubulaire est ménagé autour de chaque languette 2, dans la bordure de rainure 1 qui est située à l'opposé de celle d'où est issue cette languette.

Chaque évidemment 4 est dimensionné pour permettre l'insertion transversale sous pression, jusque dans la rainure 1 où il s'ouvre, d'une portion d'élément tubulaire de dimensions appropriées qui est temporairement courbée pour passer dans l'évidement au ras de la languette 2 qu'il entoure, cet élément tubulaire ayant tendance à reprendre une allure plus rectiligne en l'absence de contrainte contraire, de par le fait de son élasticité et/ou éventuellement sous l'action de forces axiales externes, par exemple temporairement créées manuellement ou encore dues à un effet de ressort externe et permanent.

Dans une forme préférée de réalisation, chaque évidement 4 est ouvert au niveau de sa paroi de fond faisant face à la languette correspondante qui surplombe cette ouverture ainsi que le montre notamment la figure 3; de plus chaque évidemment comporte une pente de coincement 5 sur sa paroi de fond, à proximité de l'extrémité libre de la languette 2 associée, pour interdire la libre sortie transversale d'un élément préalablement inséré dans la rainure via cet évidemment, la distance entre le fond de l'évidement et la languette allant en décroissant parallèlement à la rainure, comme on le voit pour la pente 5" associée à la languette 2".

L'épaisseur C choisie de languette 2 détermine en liaison avec les dimensions A et B de la rainure 1, évoquées plus haut, les dimensions transversales maximales admissibles pour l'élément tubulaire.

Dans la forme de réalisation proposée, chaque évidemment 3 présente une courbure 6 et est associé à une échancrure 7 ménagée dans la bordure opposée de la rainure, pour faciliter les manipulations de l'élément conducteur qui conduisent à son insertion.

Selon une seconde forme de réalisation de l'invention, une rainure est également susceptible de comporter au moins un double dispositif référencé D2 sur la figure 1.

Ce dispositif double comporte deux languettes 2' et 2" et deux évidements 4' et 4" qui respectivement voisines et voisins sont disposés quasiment tête-bêche de part et d'autre de la rainure, impliquant deux courbures inverses et successives de l'élément tubulaire lors de son insertion dans la rainure par pression transversale.

Bien entendu , les autres caractéristiques déjà définies en relation avec le dispositif simple initialement présenté sont également susceptibles d'être reprises au niveau des éventuels dispositifs doubles.

## Revendications

1. Système destiné à assurer la fixation d'un élément tubulaire souple, notamment un câble ou un tube, sur une paroi (0) dotée à cet effet d'une rainure de maintien (1) dimensionnée pour loger un tronçon de cet élément tubulaire, caractérisé en ce que la rainure de maintien est munie d'au moins un dispositif, de type quart de tour, composé d'au moins une languette transversale (2) de rétention d'élément tubulaire venant surplomber la rainure sur la plus grande partie de la largeur de cette rainure en vue d'assurer la rétention et d'au moins un évidemment (4) d'insertion d'élément tubulaire qui, entourant la languette , est latéralement ménagé en bordure de la rainure de maintien, de l'autre côté de celle-ci par rapport à ladite languette, pour permettre l'insertion transversale, jusque dans ladite rainure de maintien, d'une portion d'élément tubulaire temporairement courbée pour passer par l'évidement d'insertion au ras de ladite languette.

2. Système de fixation selon la revendication 1, caractérisé en ce que le dispositif, de type quart de tour, comporte une pente (5) de coincement de fil en fond d'évidement, à proximité de l'extrémité libre de la languette correspondante, pour interdire la libre sortie transversale de l'élément tubulaire hors du dispositif.

3. Système de fixation selon au moins l'une des revendications 1, 2 caractérisé en ce qu'il comporte au moins un dispositif double à deux languettes (2' et 2'') et deux évidements (4' et 4") respectivement accolés tête-bêche de part et d'autre de la rainure de maintien (1).

## Patentansprüche

1. System zur Befestigung eines biegsamen rohrförmigen Elements, insbesondere eines Kabels oder eines Rohrs, an einer zu diesem Zweck mit einer Halterille (1) ausgestatteten Wand (0), die so bemessen ist, daß sie einen Abschnitt dieses rohrförmigen Elements aufnehmen kann, dadurch gekennzeichnet, daß die Halterille mit mindestens einer Umlenkvorrichtung um 90° versehen ist, die aus mindestens einer transversalen Rückhaltelasche (2) für ein rohrförmiges Element, die über den größten Teil der Breite dieser Rille in diese hineinragt, um den Rückhalt zu gewährleisten, und aus mindestens einer Einfügungsaushöhlung (4) für das rohrförmige Element besteht, die um die Lasche herumläuft und seitlich am Rand der Rille auf der der Lasche entgegengesetzten Seite angeordnet ist, um die transversale Einführung eines rohrförmigen Elements bis zur Rille zu ermöglichen, wobei das Element kurzfristig gekrümmt wird, um durch die Einführungsaushöhlung in Höhe der Lasche zu gelangen.

2. Befestigungssystem nach Anspruch 1, dadurch gekennzeichnet, daß die Umlenkvorrichtung eine Schräge (5) für das Einklemmen eines Drahts am Boden der Aushöhlung in der Nähe des freien Endes der entsprechenden Lasche aufweist, um ein freies Austreten des rohrförmigen Elements in Querrichtung aus der Vorrichtung zu verhindern.

3. Befestigungssystem nach mindestens einem der Ansprüche 1 und 2, dadurch gekennzeichnet, daß es mindestens eine doppelte Vorrichtung mit zwei Laschen (2' und 2") und zwei Aushöhlungen (4' und 4") aufweist, die um 180° gegeneinander verdreht zu beiden Seiten der Halterille (1) angeordnet sind.

## Claims

1. System for fixing a flexible tubular member, for example a cable or a tube, to a wall (0) provided to this end with a retaining groove (1) dimensioned to accommodate a section of the tubular member, characterised in that the retaining groove is provided with at least one quarter-turn type device made up of at least one transverse tongue (2) for retaining the tubular member overlying the greater part of the width of the groove and at least one tubular member insertion opening (4) which, surround the tongue, is formed on the flank of the retaining groove on the opposite side of the latter relative to said tongue to enable transverse insertion into said retaining groove of a tubular member portion temporarily curved to pass through the insertion opening level with said tongue.

2. Fixing system according to claim 1 characterised in that a quarter-turn device includes a wedge (5) at the bottom of the opening in the vicinity of the free end of the corresponding tongue to prevent free transverse exit of the tubular member from the device.

3. Fixing system according to claim 1 and/or claim 2 characterised in that it includes at least one double device with two tongues (2' and 2") and two openings (4' and 4") in respective head-to-tail arrangements on opposite sides of the retaining groove (1).
